# EUROPEAN PATENT APPLICATION

(11) **EP 4 403 767 A1**
(43) Date of publication of application: **24.07.2024**
(21) Application number: 23382046.3
(22) Date of filing: 20.01.2023
(51) Int. Cl.: F03D 1/06

(54) **FLOW MODIFYING ELEMENT FOR A WIND TURBINE BLADE**

(71) Applicant: Siemens Gamesa Renewable Energy Innovation & Technology S.L., 31621 Sarriguren (Navarra) (ES)
(72) Inventor: The designation of the inventor has not yet been filed
(74) Representative: SGRE-Association

(57) **Abstract**

A flow modifying element for a wind turbine blade (10) is provided. The wind turbine blade (10) comprises a blade body (20) having a leading edge (16), a suction surface (18), and a pressure surface (19). The flow modifying element (30) is configured to provide a trailing edge (17) for at least a longitudinal section (15) of the wind turbine blade (10), wherein the flow modifying element (30) and the blade body (20) form an aerodynamic profile. The flow modifying element comprises a trailing end (37) that provides the trailing edge (17) of the aerodynamic profile, a suction surface extending section (38) that extends the suction surface (18) of the blade body (20) towards the trailing end (37); and a pressure surface extending section (39) that extends the pressure surface (19) of the blade body (20) towards the trailing end (37) .

## Description

### FIELD OF THE INVENTION

The present invention relates to a flow modifying element for a wind turbine blade, in particular for providing a trailing edge for such blade, and further to a wind turbine blade comprising such flow modifying element.

### BACKGROUND

The use of wind energy is proliferating. To extract more energy from the wind, larger wind turbines requiring larger blades are being manufactured and installed. A wind turbine blade is mounted to a hub of a wind turbine rotor at its root end and extends to a tip end. Whereas the properties of the root region of the blade are usually governed by structural considerations, the mid span and outboard regions of the blade are generally designed for improved aerodynamic performance. The aerodynamic profiles (also termed "airfoils") in the root region of the blade have therefore often a high relative thickness.

To aid rotor startup and energy production at medium wind speeds, the profiles in the root region of the blade may be provided with a large chord length and large twist. This however makes manufacturing of the blade more cost-intensive and difficult, and further, due to the size and the weight of the blade, poses problems for logistics, such as transportation of the blade.

To address such problems, the document US 7,204,674 B2 describes a rotor blade that has at its trailing edge a part that allows reduction of the chord length of the blade, for example by providing an inflatable part that is deflated during transport and can be inflated during normal operation.

Other solutions disclosed in the document include an element that can be extended to prolong a surface of the blade or deformable material that can be wound up using folding arms that extend. A problem further arises due the load applied to such large blades during high wind conditions. In the above document, the inflatable element may be deflated again to reduce the area of the blade, or the surface element may be retracted. A similar solution is disclosed in document EP 2 322 793 A1, in which a trailing edge section of the blade comprises a collapsible chamber that collapses when a predetermined rotor speed is reached. Thereby, the aerodynamic performance of the blade is reduced, whereby over-speed control is achieved. The reduced aerodynamic performance reduces the rotor speed and thus prevents damage to the blade.

Rotor blade manufacturing further often results in a blunt trailing edge of the aerodynamic profile, which may for example be due to the gluing together of the two shell parts having a certain thickness, which is increased by the thickness of the glue layer, as described in the document WO 2011/157849 A2. The document suggests the providing of a premanufactured trailing edge part having a well-defined shape and edge, which essentially extends the profile shape given by the blade. Another possibility of dealing with a blunt trailing edge in the inner region of the blade is described in document US 2021/0079886 A1, wherein a splitter plate is mounted to the blunt trailing edge below a transition from the suction side to the trailing edge and which has a surface part that lies in the shear layer generated by the suction side of the blade.

The above solutions still suffer from deficiencies regarding their aerodynamic performance. In particular, it is desirable to allow the tuning of the aerodynamic performance in accordance with the design goals of the blade designer. It may in particular be beneficial to provide a lift increase and/or drag decrease.

### SUMMARY

Accordingly, there is a need to improve the aerodynamic performance of wind turbine blades and in particular to provide a reduction of drag and/or an increase of lift for such rotor blade.

This need is met by the features of independent claims. The dependent claims describe embodiments of the invention.

According to an embodiment, a flow modifying element for a wind turbine blade is provided, wherein the wind turbine blade comprises a blade body having a leading edge, a suction surface and a pressure surface. The flow modifying element is configured to provide a trailing edge for at least a longitudinal section of the wind turbine blade. The flow modifying element and the blade body form an aerodynamic profile. The flow modifying element comprises a trailing end that provides the trailing edge of the aerodynamic profile, a suction surface extending section configured to extend the suction surface of the blade body towards the trailing end and a pressure surface extending section configured to extend the pressure surface of the blade body towards the trailing end.

By means of such flow modifying element (abbreviated herein as element), the aerodynamic performance of the wind turbine blade may be improved, in particular of a root region thereof. By the suction surface extending section and the pressure surface extending section, the lift coefficient CL may be increased and/or the drag coefficient CD may be reduced. Particular improvements may be achieved with respect to a blunt trailing edge which may be present in the root region of a conventional wind turbine blade.

Optionally, the trailing end of the flow modifying element may be configured to be arranged, in a direction towards the suction surface, above an extrapolation of the pressure surface of the blade body (feature (a)). In this respect, "above" may refer to a direction directed from the pressure surface towards the suction surface, for example a direction perpendicular to the chord line of the blade body. Preferably, the trailing end of the flow modifying element (herein abbreviated as "element") may be arranged fully above the extrapolation of the pressure surface, i.e. the trailing end may be arranged completely above and may not intersect the extrapolation of the pressure surface of the blade body. In other words, the trailing end may be spaced apart from the extrapolation of the pressure surface in a first direction, and the first direction may be a direction from the pressure surface to the suction surface. It is noted that extrapolation refers to an estimated extension of the respective surface or curve, i.e. to an imaginary surface or curve, which is used herein for geometrically describing the relative arrangement of the components. It should be clear that the extrapolation is in the direction of the trailing end. Such extrapolation may use a straight line that is tangential to the point where the profile section corresponding to the suction/pressure surface ends, or may use a curved line having a curvature that corresponds to the curvature of the profile section/surface to be extrapolated.

In an exemplary configuration, the trailing end may be arranged above a chord line of the blade body. The chord line may be the line intersecting the two profile points with the largest mutual distance in the profile of the blade body. If the trailing end of the blade body is flat, the chord line may cut the flat trailing end in half.

The suction surface extending section may be a surface on a suction side of the element, and the pressure surface extending section may be a surface on a pressure side of the element.

The trailing end may be arranged between the suction surface extending section and the pressure surface extending section and may connect the suction surface extending section and the pressure surface extending section. The element may have only a single trailing end in the profile.

The flow modifying element may be a passive element. Mounting to or integration into the blade may thus be facilitated.

In an example, the pressure surface extending section may be shaped to provide in the aerodynamic profile a first pressure side profile section that approximates or is a convex curve and a second pressure side profile section that approximates or is a concave curve. Approximate herein means that the first and second sections do not need to be perfectly smooth, but may comprise straight sections or angles. Convex curve may further mean that the respective surface part of the element forms a convex plane, i.e. may bulge outwardly. Concave curve may mean that the respective surface part of the element may form a concave plane, i.e. a plane that bulges inwardly.

The profile may further comprise an inflection point between the first and second pressure side profile sections. The first and second profile sections may for example approximate an S-shape. Such shape of the pressure side extending section of the element may reduce drag.

For example, the first pressure side profile section may extend from a pressure side profile section of the blade body and may be shaped to bend away from an extrapolation of the pressure side profile section of the blade body and may bend towards the suction surface extending section of the element. Such configuration of the profile section may reduce drag.

In another example, the pressure surface extending section may be shaped to provide in the aerodynamic profile a pressure side profile section that forms a protrusion that protrudes from an extrapolation of a pressure side profile section of the blade body in a direction away from the suction surface extending section of the element. The protrusion may for example be shaped to increase a pressure on the pressure surface of the wind turbine blade. By such shape of the profile section, a hump may be formed that may reduce the flow speed and increase the pressure on the pressure surface, which may result in an increase of lift. This pressure side profile section may further be shaped to bend towards the suction surface extending section of the flow modifying element and may in particular approximate or may be a convex curve (i.e., it may correspond to the first pressure side profile section). The pressure surface extending section may have a profile with a smooth curvature and may thus both increase lift and reduce drag. Further, the shape may result in a combined effect of reducing wake turbulence while optimizing aerodynamic performance.

The suction surface extending section may be configured to reduce flow separation from the suction surface of the wind turbine blade.

By means of the suction surface extending section, the total chord of the blade may be increased and rounded areas at the end of the blade body may be removed, whereby lift may be increased. Further, the section may reduce drag by a respective chord increase and further by avoiding flow separation at high relative thickness profiles and high angles of attack.

In an example, the suction surface extending section may be configured to be angled with respect to (an adjacent part of) the suction surface of the blade body (feature (c)). By providing a respective angle, the flow modifying element may be tuned for increasing lift and/or reducing drag.

The suction surface extending section may be configured to form a negative angle with the suction surface of the blade body, or may be configured to form a positive angle with the suction surface of the blade body, or may be configured to be tangential to the suction surface of the blade body. In a plane of the aerodynamic profile in which the leading edge is provided on a left-hand side and the suction surface is provided on an upper side, a positive angle may correspond to a clockwise direction and a negative angle may correspond to a counter-clockwise direction. If the suction surface extending section is tangential to the suction surface of the blade body, a moderate lift coefficient increase and drag coefficient reduction may be achieved. For a positive angle (clockwise direction), further drag reduction in case of a flow that is fully attached at all angles of attack may be achieved. By a negative angle (counter-clockwise direction), detachment of the flow at higher relative thickness airfoils may be reduced. The suction surface extending section thus allows the tuning of the flow modifying element for different purposes and in dependence on the properties of the aerodynamic profiles of the blade body where it is provided.

The suction surface extending section may be shaped to provide in the aerodynamic profile a suction side profile curve that includes a straight section or substantially straight section that extends over most of the length of the suction side profile curve. The negative angle or the positive angle may be measured between an extrapolation of the suction surface of the blade body and the straight or substantially straight section of the suction side curve. It should be clear that profile sections of such airfoil are generally shaped to provide a smooth curvature for optimum aerodynamic performance, and the term "substantially straight" encompasses such rounding to provide a smooth surface. Most may refer to more than 50%. If the suction side profile curve of the element does not include a straight section but is fully curved, then an average of such curve may be taken to determine the angle (for example by fitting a straight line to such curve, e.g., using the chord line to define a coordinate system for such fitting).

The suction side profile curve may further comprise an intermediate section configured to be located between a suction side profile section of the blade body and the straight or substantially straight section. A smooth transition from the suction surface to the suction surface extending section of the element may thereby be obtained. The intermediate section may for example be straight and form a first angle with the suction surface and a second angle with the suction surface extending section, or may be curved to provide a smooth transition.

The flow modifying element may be configured to have a shape that is matched to a thickness of a rear part of the blade body, wherein the flow modifying element may be arranged so that the thickness of the aerodynamic profile is continuous at the transition from the blade body to the flow modifying element. Such smooth transition may provide a further drag reduction. Continuous may in particular mean that there is no step.

The element may be solid, or the element may comprise voids or cavities. By such voids or cavities, the weight and the material required for manufacturing may be reduced. Such voids or cavities may for example extend in a longitudinal direction through a main body of the element, and may be closed in a lateral direction perpendicular to the longitudinal extension of the element.

The element may be made from plastic material, fiber reinforced material (for example glass fiber or carbon fiber reinforced), a composite material or any other suitable material.

The trailing end of the element may be a blunt end, and the blunt end may preferably be configured to extend substantially perpendicular to a chord line of the blade body or may extend at a different angle to the chord line. The trailing end of the element may in particular be flat or may bulge outwardly. In other implementations, the trailing end may be rounded or have a different shape.

According to a further example, an extension of the flow modifying element in chord direction of the wind turbine blade (width of the element) may be smaller than a distance in the chord direction from the blade body to an intersection between an extrapolation of the suction surface and an extrapolation of the pressure surface of the blade body (feature (d)). If the extrapolation of these surfaces does not intersect, the distance is infinite so that the width of the flow modifying element is smaller. For example, compared to an add-on that simply extends the suction and pressure surfaces until they intersect, the present flow modifying element may provide a reduced drag, may further modify the lift and may provide a smaller combined chord length; it may further reduce weight and may be less costly to manufacture as it conserves material.

The suction surface extending section may be configured to form a continuous surface with the suction surface of the blade body, and/or the pressure surface extending section may be configured to form a continuous surface with the pressure surface of the blade body (in particular when the element is mounted to/integrated with the blade body). Continuous may mean that in the aerodynamic profile, the transition from the blade body to the element may not have a step or jump, it may in particular provide a smooth transition. Drag may thus be reduced further.

The flow modifying element may be an add-on element that further comprises a mounting section configured to be mounted to a trailing edge of the blade body, or the flow modifying element and the blade body may be formed integrally to form the wind turbine blade. In the former case (add-on), the blade body may have an own trailing edge, to which the add-on element is mounted, the element then providing by means of its trailing end the trailing edge for the wind turbine blade. The trailing edge of the blade body may thus be covered and may essentially be substituted by the trailing edge provided by the element. In the latter case (integrated element), the flow modifying element may be formed when manufacturing the wind turbine blade so that the trailing end of the element is the same as the trailing edge of the wind turbine blade. The blade body may in this case not have a trailing edge in the respective longitudinal blade section, but the trailing edge of the blade body may be estimated to be at the location at which the airfoil, from which the blade body is formed, would have its trailing edge.

In an example, the mounting section of the flow modifying element may have a rounded shape configured to be mounted to a rounded trailing edge of the blade body. The mounting section may in particular be configured to adapt to the surface shape of the trailing edge of the blade body. Thereby, a larger attachment area may be achieved, which may result in a more secure mounting of the element to the blade body. The trailing edge of the blade body may for example be formed by the suction surface of the blade body curving towards the pressure surface of the blade body to meet the pressure surface at an angle larger than 45°, preferably larger than 70° or 80° (for example about 90°). The radius of curvature of the trailing edge of the blade body may for example be equal to or smaller than a thickness of the blade body at its trailing edge.

The add-on element may be configured to be mounted to the blade body by means of an adhesive, a touch fastener (e.g., Velcro^{®}), a mechanical fastener, or any other mounting element.

In the aerodynamic profile, the trailing edge of the blade body may be covered by at least 50%, preferably by at least 70%, e.g. completely, in the thickness direction by the flow modifying element. The trailing edge of the blade body may thus be fully be covered by the element (in the longitudinal section over which the element extends). A strong mechanical connection may thereby be achieved between the flow modifying element and the trailing edge of the blade body.

A width of the flow modifying element may be defined in a direction of a chord of the blade body from a position at which the pressure surface extending section abuts the pressure surface of the blade body to the trailing end of the element.

The element may be an add-on element configured to be mounted to the blade body, and the width may be selected from the range of 3%c to 40%c, preferably 5%c to 30%c, more preferably 10%c to 25%c, wherein c is the chord length of the blade body at the longitudinal position of the flow modifying element, or is the average chord length taken as an average of the chord lengths of the blade body over a longitudinal range of the blade over which the flow modifying element (e.g. the respective segment) extends. The chord length may in this case not include the element.

When the flow modifying element is integral with the blade body, the width of the element may be selected from the range of 2%c to 29%c, preferably 4%c to 23%c, more preferably 9%c to 20%c, wherein c is the chord length of the wind turbine blade at the longitudinal position of the element or the average chord length taken as an average of the chord length of the blade over a longitudinal range of the blade body over which the element (e.g. the respective segment) extends. As in this case, the element forms an integral part of the blade, the chord length may include the element.

The flow modifying element may be a continuous element that extends continuously over a predetermined longitudinal section of the blade, or the element may be provided as a longitudinal segment that has a predefined length in longitudinal direction of the blade. Plural such segments may be arranged along the longitudinal direction of the blade adjacent to each other to cover a predetermined longitudinal section of the blade.

The flow modifying element may have the same width over its longitudinal extension, or may have a variable width over its longitudinal extension. Longitudinal extension may refer to extension in the longitudinal direction of the blade.

In an example, the wind turbine blade may extend in a longitudinal direction from a position at 0%L, at which the wind turbine blade is mountable to a hub of a wind turbine rotor, to a blade tip at a position of 100%L, wherein L corresponds to the blade length. The flow modifying element may be configured to be provided on the blade body within a longitudinal region between 0%L and 60%L, preferably between 5% L and 50% L, more preferably between 10%L and 40%L, or in any sub-combination of these region borders, for example between 10%L and 50%L. The element may thus be provided in the root region of the blade, in which profiles generally have a high relative thickness and may have a blunt trailing edge. The root region of the blade that includes one or more respective elements may thus be provided with an improved aerodynamic performance and may in particular make a higher contribution to the annual energy production (AEP). The flow modifying element may in particular increase lift and/or reduce drag in the root region of the blade, thereby increasing AEP.

For example, the element may be configured to be provided on the blade body within a longitudinal region in which the blade has a relative thickness (t/c) in the range of 35% to 100%, preferably 40% to 95%. Thickness t may be defined as the maximum dimension of the profile perpendicular to the chord line and relative thickness as t/c. Such relatively thick profiles may particularly benefit from the flow modifying element.

The flow modifying element may not span the whole respective region, but may be provided only over a portion of the region, for example a number of longitudinal segments of the flow modifying element may be provided within the respective region.

The flow modifying element may for example be configured to be provided on the blade body over the longitudinal section having a longitudinal extension of at least 10%L, preferably at least 15%L, more preferably at least 20%L, wherein L corresponds to the blade length. The flow modifying element may extend continuously over this longitudinal section or segments of the element may be arranged adjacent to each other to cover this section.

The above features of the flow modifying element may be combined with each other. In particular, the above-mentioned features (a), (b), (c) and (d) may be used in isolation, or may be combined with each other in any arbitrary combination. Besides the above, further exemplary feature combinations include (b), (c), (d), (b)+(c), (b)+(d), (b)+(c)+(d), or (c)+(d), which may be used without feature (a) or in combination with feature (a).

According to a further aspect of the present invention, a wind turbine blade comprising a blade body having a leading edge, a suction surface, and a pressure surface is provided. The wind turbine blade further comprises a flow modifying element that has any of the configurations described herein. The flow modifying element is mounted to the blade body, or the flow modifying element and the blade body are formed integrally to form the wind turbine blade. The flow modifying element is configured to provide a trailing edge for at least a longitudinal section of the wind turbine blade. By means of such wind turbine blade, advantages similar to the ones outlined further above may be achieved.

According to a further aspect, a wind turbine comprising a respective wind turbine blade is provided.

According to a further aspect, a method of operating a wind turbine is provided, wherein the wind turbine comprises a wind turbine blade having any of the configurations described herein. By such method, the annual energy production of the wind turbine may be increased.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing showing a wind turbine including a wind turbine rotor with wind turbine blades according to an embodiment.
Fig. 2 is a schematic drawing showing a wind turbine blade, wherein a longitudinal section over which a flow modifying element extends is indicated according to an embodiment.
Fig. 3 is a schematic drawing showing a profile of a wind turbine blade without flow modifying element.
Fig. 4 is a schematic drawing showing a profile of a wind turbine blade including a flow modifying element according to an embodiment.
Fig. 5 is a schematic drawing showing a profile of a wind turbine blade including a flow modifying element according to an embodiment.
Fig. 6 is a schematic drawing showing a profile of a wind turbine blade including a flow modifying element according to an embodiment.
Fig. 7 is a schematic drawing showing a perspective view of a flow modifying element according to an embodiment.
Fig. 8 is a schematic drawing showing a perspective view of a flow modifying element according to an embodiment.
Fig. 9 is a schematic drawing showing a perspective view of a flow modifying element according to an embodiment.
Fig. 10 is a schematic drawing showing a perspective view of a flow modifying element according to an embodiment.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

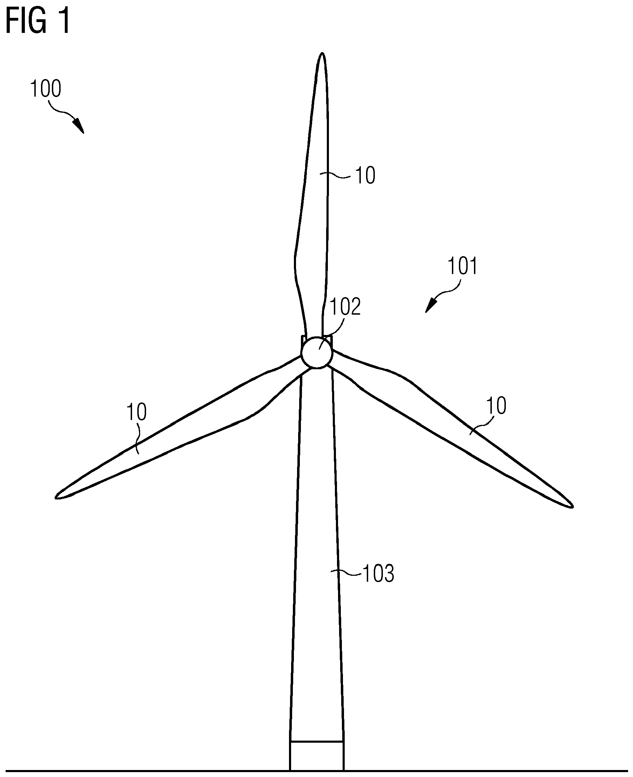

Fig. 1 schematically illustrates a wind turbine 100 according to an example. The wind turbine 100 includes a wind turbine rotor 101 and a wind turbine tower 103. The rotor 101 has a hub 102 to which three rotor blades 10 are mounted, which may be configured in accordance with any of the examples and embodiments described herein.

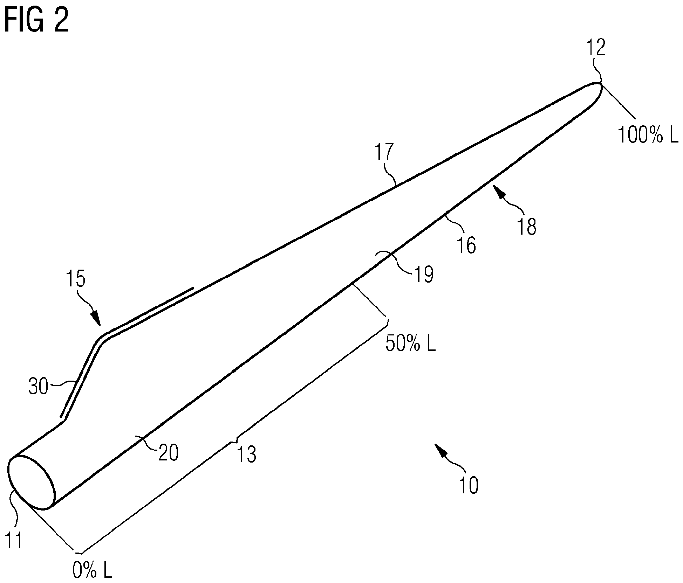

Fig. 2 schematically illustrates a wind turbine blade 10 according to an embodiment. The blade has a length L, which may for example be more than 30, 50, or even more than 60 m. The blade 10 has a root end 11 at which the blade 10 is mountable to the hub 102, and has a tip end 12 at which the tip of the rotor blade is located. The root end is located at 0%L and the tip end at 100%L. A root region 30 may span from 0%L to about 50%L, although such root region may also be defined differently.

Blade 10 may include a blade body 20 and a flow modifying element 30. Blade body 20 and flow modifying element 30 may be formed integrally to form the wind turbine blade 10, or flow modifying element 30 may be an add-on element that is mounted to the blade body 20. The flow modifying element may be provided within the longitudinal region between 0%L and 60%L, preferably between 5%L and 50%L, for example between 10%L and 50%L or 10%L and 40%L. Within the respective longitudinal region, several longitudinal segments of element 30, each having a predefined length, may be provided, and they may be provided continuously or may be spaced apart. Within the longitudinal region, the element 30 may also be provided continuously over a certain longitudinal section 15. The longitudinal section 15 over which element 30 is provided may for example have a size of at least 10%L, at least 15%L or at least 20%L. The element may for example extend over the longitudinal section 15 having a size between 10%L and 40%L. The element may continuously cover this section, or longitudinal segments of the element may be arranged adjacent to each other over this section.

Blade 10 has a leading edge 16 and a trailing edge 17, wherein in longitudinal regions of the blade not provided with element 30, a trailing edge 21 of the blade body 20 may form the trailing edge 17 of the blade, whereas in longitudinal regions covered by element 30, a trailing end 37 of the element 30 may form the trailing edge 17 of blade 10.

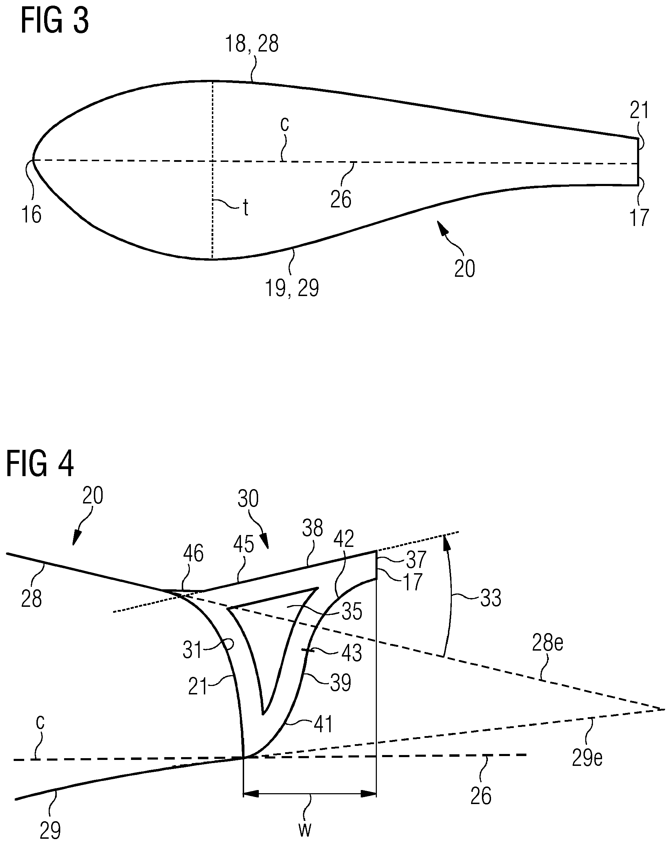

Generally, a profile is a cross-section of the blade perpendicular to the longitudinal axis of the blade. Such profile, also termed "aerodynamic profile" herein, generally has a thinner airfoil shape in the outboard region of the blade, a thicker airfoil shape in the root region of the blade, and may even approximate a circular shape at the root end 11. Fig. 3 illustrates an exemplary profile of the blade body 20 which may be used in the root region 13. The chord line 26 may be defined as the line intersecting the two profile points with the largest mutual distance. Where the profile has a flat trailing edge 21, as shown in the example of Fig. 3, the chord line 26 may cut the trailing edge in the middle thereof. The chord length c is the distance between these two profile points. The thickness t of the profile may be defined as the maximum thickness perpendicular to the chord direction. The relative thickness of a profile is the ratio of thickness to chord length, t/c. Chord length and thickness may be measured without add-ons or extensions.

The profile of blade body 20 includes the leading edge 16 and a trailing edge 21, which correspond to leading edge 16 and trailing edge 17 of the blade without add-ons. The blade body 20 further includes the suction surface 18 and the pressure surface 19 that correspond to a respective suction side profile section 28 and pressure side profile section 29 in the profile shown in Fig. 3. These profile curves extend from the leading edge 16 to the trailing edge 21 of the blade body 20. As the profile of body 20 has a flat trailing edge 21, it may be termed a flatback airfoil. The blunt trailing edge of such airfoil of the root region may also be rounded. In particular, as shown in Fig. 4, the trailing edge may be rounded; for example, the profile curve of the trailing edge may bend away from the suction side towards the pressure side profile section 29 and may meet it at an approximately right angle. Such shape of the trailing edge 21 may have advantages from a manufacturing viewpoint, but may be associated with reduced aerodynamic performance.

The aerodynamic performance may be improved by the flow modifying element 30 that is mounted to the trailing edge 21 of the blade body or may be integrated with the blade body. An exemplary implementation is shown in Fig. 4. Element 30 includes a suction surface extending section 38 and a pressure surface extending section 39 that extend the respective suction surface 18 or pressure surface 19 of the blade body towards the trailing end 37 of element 30. When mounted to the blade body, the trailing end 37 provides the trailing edge of the aerodynamic profile and thus of the blade. If element 30 is provided as a add-on, it may include the mounting section 31. Section 31 may be configured to be mounted to a rounded trailing edge 21 of the blade body 20. Mounting may occur by an adhesive, by Velcro^{®}, or by mechanical fasteners. Element 30 may be made from a composite, a plastic material, a fiber reinforced plastic, or the like. Element 30 may include a void or cavity 35. This may reduce the weight of element 30 and may further reduce the amount of material required for production. Besides being provided as an add-on, element 30 may also be formed integrally with the blade body 20, for example during the manufacturing of the blade body 20. In this case, no mounting section 31 may be provided. The element 30 may in such integral configuration be identified by the transition from the pressure side profile section 29 to the pressure surface extending section 39, in particular as the pressure surface extending section 39 generally deviates significantly from an extrapolation 29e of the section 29.

Extrapolation 29e is a geometric extrapolation of the pressure side profile section 29 of body 20. The trailing end 37 of element 30 is located above this extrapolation 29e, wherein "above" refers to a direction pointing from the pressure surface to the suction surface, e.g. perpendicular to chord line 26. Further, as can be seen, the width w of element 30 is shorter than the width where an extrapolation 28e of the suction side profile section 28 and the extrapolation 29e intersect. Width w may be defined from the end of the pressure surface 19 to the trailing end 37 of element 30 in the direction of the chord line 26, wherein the end of the pressure side profile section 29 is where it transitions into the pressure surface extending section 39, as illustrated in Fig. 4. The end of suction side profile section 28 and the transition to trailing edge 21 may be at the position at which the profile starts to bend away from an extrapolation 28e of the suction surface estimated for the respective airfoil.

In the profile, the pressure surface extending section 39 may include a first profile section 41 that approximates a convex curve and a second profile section 42 that approximates a concave curve. An inflection point 43 may be located between the first and second profile sections 41, 42. Such smooth and curved shape may reduce drag. Accordingly, the pressure surface extending section 39 of element 30 first bulges outwardly, and then bulges inwardly. The first pressure side profile section 41 may start where the pressure side profile section 29 of body 20 ends.

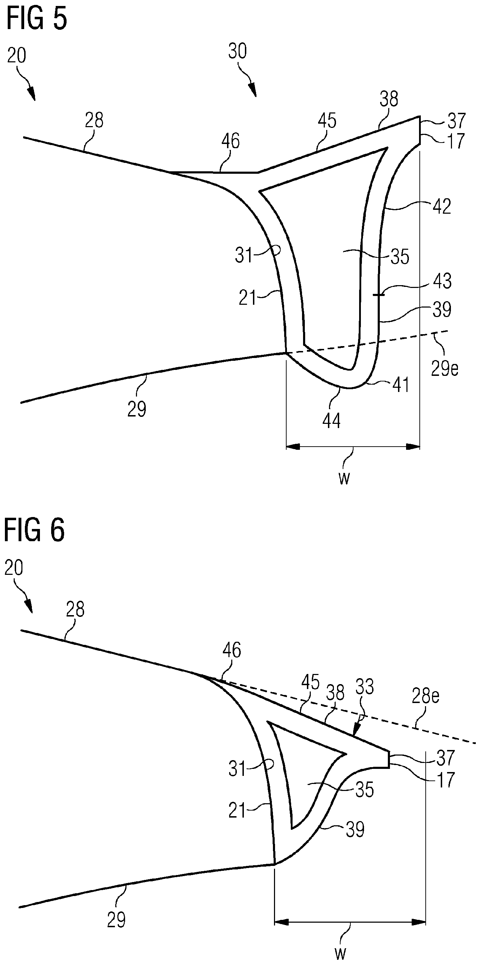

The suction surface extending section may form in the aerodynamic profile a suction side profile curve that includes a (substantially) straight section 45. As can be seen in the example of Fig. 4, this section 45 extends over most of the suction side profile curve. An intermediate section 46 may provide a smooth transition between the suction side surface profile section 28 of body 20 and the suction surface extending section 38 of element 30. The suction side profile curve, in particular the straight section 45, may form an angle 33 with the suction side profile section 28, as shown with respect to the extrapolation 28e. In the example of Fig. 4, the angle is a negative angle, i.e. it is in counter-clockwise direction. By such configuration, the flow speed on the suction side may be reduced and flow separation may be avoided. Detached flow at higher relative thickness airfoils may thereby be reduced. In other exemplary configurations, the suction side profile curve may essentially be tangential to the suction side profile section 28. This may result in an increase of the lift coefficient and a reduction of the drag coefficient, compared to the blade body 20 without element 30. Further, as shown in Fig. 6, the angle 33 may also be a positive angle (clockwise direction). This may lead to a further reduction of the drag coefficient, in particular if the flow is fully attached at all angles of attack.

Angle 33 may be adjusted differently for different longitudinal positions along the blade. At different airfoils along the blade, the aerodynamic impact may be different. Accordingly, adjusting the angle 33 of element 30 may allow the tuning of the aerodynamic properties of the respective airfoil to the desired values.

Fig. 5 shows a further exemplary implementation of element 30. The pressure surface extending section 39 forms a protrusion 44 that protrudes from the extrapolation 29e of the pressure side profile section 29 of the blade body 20. The first curve section 41 again has a convex shape which is however more pronounced to form the protrusion 44. Whereas the angle between the first profile section 41 and the extrapolation 29e of pressure side profile section 29 is negative (counter-clockwise) in Fig. 4, this angle is positive (clockwise) in Fig. 5. It should be clear that clockwise and counter-clockwise refer to the orientation of the profile as illustrated in the drawings, i.e. where the leading edge is on the left-hand side and the suction surface is on the upper side of the profile. Such protrusion 44 may increase the pressure on the pressure surface and may thus lead to an increase in lift. This may be particularly beneficial for airfoils that approach a cylindrical shape, i.e. for airfoils that are relatively close to the root end 11 of the blade 10.

The width w of the element may for example be between 3% and 40%, e.g. between 5% and 30% of the chord length c of the blade body 20. If the element 30 is integrated with the blade body 20 and the chord is measured over the whole blade formed by such integration, the width of the element may be 2% to 29%, e.g. 4% to 23% of the whole chord length. The element may be provided on profiles of the blade that have a relative thickness t/c from the range between 35% to 100%.

The trailing end 37 of the element 30 may have a thickness that may be between 5% to 50% of the thickness of the trailing edge 21 of the blade body 20. By providing such thinner trailing edge by means of element 30, vortex generation and noise may be reduced. In particular, a cost-efficient manufacturing method may only provide a relatively blunt trailing edge of the blade body, so that by means of such add-on, aerodynamic advantages as well as noise reduction may be achieved. The thickness of the trailing edge may be measured from the point where pressure surface 19 ends perpendicular to chord line 26 to the intersection with the suction surface 18 or an extrapolation 28e thereof.

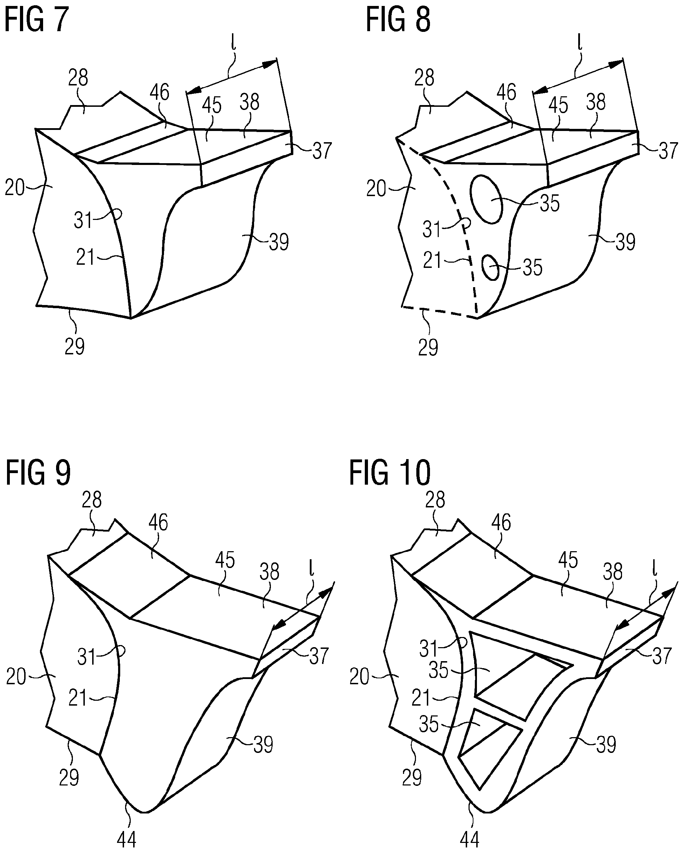

Figs. 7 to 10 show perspective views of exemplary implementations of the flow modifying element 30. It should be clear that these may be combined with any of the other features described herein, and that the element 30 may be provided as add-on or integral with body 20. Figs. 7 and 8 correspond to the element 30 shown in Fig. 4, wherein the example of Fig. 7 does not include voids or cavities 35 inside the element 30 (i.e. the element is formed solidly), and two cavities 35 are provided in the example of Fig. 8. It is further illustrated that the element 30 may form a segment that has a certain longitudinal extension l in the longitudinal direction of the blade, which is shown shortened in the figures for the purpose of illustration. The length l may be chosen such that for a particular segment, the profile shape of the element 30 can remain essentially the same. Adjacent segments in longitudinal direction of element 30 may be provided with different shapes, e.g. different angles 33, protrusions 44, different widths w, or the like. The width w may be constant over the length l of a respective segment of element 33, or the width w may change in dependence on the chord length c of blade body 20 at the respective longitudinal position of the profile. For example, the chord length c of blade body 20 may be averaged over the section over which the length l of the element 30 extends and may be used as a basis for determining the width w of the element 30.

Figs. 9 and 10 correspond to the configuration shown in Fig. 5, wherein in the example of Fig. 9, no void 35 is provided (i.e. the element 30 is solid), and in the example of Fig. 10, two voids 35 are provided inside element 30. The void or voids 35 may be enclosed in the profile circumferentially by the respective sections of the element 30, and may be exposed or may be closed in longitudinal direction.

By the configurations disclosed herein, the flow modifying element 30 can be configured in dependence on the longitudinal position on the blade where it is provided. For example, depending on the blade section and the airfoil geometry and operating conditions, the element may be configured for a lift coefficient increase, a drag coefficient reduction, and/or a maximization of CL/CD. In particular, aerodynamic parameters may be optimized for each longitudinal blade section by means of the element, so that an optimum annual energy production may be obtained. By providing the element as an add-on element, manufacturing of the blade body may further be kept simple while still benefiting from improved aerodynamic performance. The element may further be adapted to the respective blade type, the wind speed at the site, manufacturing capabilities, and other site-specific conditions, such as dirt aggregation, erosion and the like. The flow modifying element is further compatible with other add-on devices, such as vortex generators, Dino Shells^{®} and other devices. The width w of the flow modifying element may be selected in accordance with the blade length, the airfoil relative thickness and shape, blade twist and operational angle of attack. The curvature on the pressure surface extending section of the element may be defined in accordance with the airfoil relative thickness and shape, the width w, and the desired aerodynamic performance, such as drag reduction or lift increase or both. Similarly, the angle of the suction surface extending section may be selected in accordance with the blade section, the shape of the airfoil and the desired aerodynamic properties.

Improved aerodynamic performance as well as an improved annual energy production may thus be achieved by the flow modifying element disclosed herein.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A flow modifying element for a wind turbine blade (10), wherein the wind turbine blade (10) comprises a blade body (20) having a leading edge (16), a suction surface (18), and a pressure surface (19), wherein the flow modifying element (30) is configured to provide a trailing edge (17) for at least a longitudinal section (15) of the wind turbine blade (10), wherein the flow modifying element (30) and the blade body (20) form an aerodynamic profile, wherein the flow modifying element comprises:
- a trailing end (37) that provides the trailing edge (17) of the aerodynamic profile;
- a suction surface extending section (38) configured to extend the suction surface (18) of the blade body (20) towards the trailing end (37); and
- a pressure surface extending section (39) configured to extend the pressure surface (19) of the blade body (20) towards the trailing end (37),
wherein the trailing end (37) of the flow modifying element (30) is configured to be arranged, in a direction towards the suction surface, above an extrapolation of the pressure surface (19) of the blade body (20).

2. The flow modifying element according to claim 1, wherein the pressure surface extending section (39) is shaped to provide in the aerodynamic profile a first pressure side profile section (41) that approximates a convex curve and a second pressure side profile section (42) that approximates a concave curve.

3. The flow modifying element according to claim 2, wherein the first pressure side profile section (41) extends from a pressure side profile section (29) of the blade body (20) and is shaped to bend away from an extrapolation (29e) of the pressure side profile section of the blade body and to bend towards the suction surface extending section (38) of the flow modifying element (30).

4. The flow modifying element according to any of the preceding claims, wherein the pressure surface extending section (39) is shaped to provide in the aerodynamic profile a pressure side profile section (41) that forms a protrusion (44) that protrudes from an extrapolation (29e) of a pressure side profile section (29) of the blade body (20) in a direction away from the suction surface extending section (38) of the flow modifying element (30).

5. The flow modifying element according to any of the preceding claims, wherein the suction surface extending section (38) is configured to form a negative angle with the suction surface (18) of the blade body (20), or is configured to form a positive angle with the suction surface (28) of the blade body (20), or is configured to be tangential to the suction surface (20) of the blade body.

6. The flow modifying element according to any of the preceding claims, wherein the suction surface extending section (38) is shaped to provide in the aerodynamic profile a suction side profile curve that includes a straight section (45) or substantially straight section that extends over most of the length of the suction side profile curve, wherein the negative angle (33) or the positive angle (33) is measured between an extrapolation (28e) of the suction surface (18, 28) of the blade body (20) and the straight or substantially straight section (45) of the suction side curve.

7. The flow modifying element according to claim 6, wherein the suction side profile curve further comprises an intermediate section (46) configured to be located between a suction side profile section (28) of the blade body and the straight or substantially straight section (45).

8. The flow modifying element according to any of the preceding claims, wherein in the flow modifying element (30) is configured to have a shape that is matched to a thickness of a rear part of the blade body (20) where the flow modifying element (30) is arranged so that the thickness of the aerodynamic profile is continuous at the transition from the blade body (20) to the flow modifying element (30).

9. The flow modifying element according to any of the preceding claims, wherein a width (w) of the flow modifying element (30) in chord direction of the blade body is smaller than a distance in chord direction from the blade body (20) to an intersection between an extrapolation of the suction surface (28e) and an extrapolation of the pressure surface (29e) of the blade body (20).

10. The flow modifying element according to any of the preceding claims, wherein the suction surface extending section (38) is configured to form a continuous surface with the suction surface (18) of the blade body (20), and/or wherein the pressure surface extending section (39) is configured to form a continuous surface with the pressure surface (19) of the blade body (20).

11. The flow modifying element according to any of the preceding claims, wherein the flow modifying element (30) is an add-on element that further comprises a mounting section (31) configured to be mounted to a trailing edge (21) of the blade body (20), or wherein the flow modifying element (30) and the blade body (20) are formed integrally to form the wind turbine blade (10).

12. The flow modifying element according to claim 11, wherein the mounting section (31) has a rounded shape configured to be mounted to a rounded trailing edge (21) of the blade body (20) .

13. The flow modifying element according to any of the preceding claims, wherein the wind turbine blade (10) extends in a longitudinal direction from a position at 0%L, at which the wind turbine blade (10) is mountable to a hub (102) of a wind turbine rotor (101), to a blade tip (12) at a position of 100%L, wherein L corresponds to a length of the blade, wherein the flow modifying element (30) is configured to be provided on the blade body (20) within a longitudinal region between 0%L and 60%L, preferably between 5%L and 50%L, more preferably between 10%L and 40%L.

14. The flow modifying element according to any of the preceding claims, wherein the flow modifying element is configured to be provided on the blade body (20) over the longitudinal section (15) having a longitudinal extension of at least 10%L, preferably at least 15%L, more preferably at least 20%L, wherein L corresponds to a length of the blade.

15. A wind turbine blade comprising a blade body (20) having a leading edge (16), a suction surface (18), and a pressure surface (19), wherein the wind turbine blade (10) further comprises:
a flow modifying element (30) according to any of the preceding claims, wherein the flow modifying element (30) is mounted to the blade body (20) or wherein the flow modifying element (30) and the blade body (20) are formed integrally to form the wind turbine blade (10), wherein the flow modifying element (30) is configured to provide a trailing edge (17) for at least a longitudinal section (15) of the wind turbine blade (10).
